# EUROPEAN PATENT SPECIFICATION

(11) **EP 3 995 942 B1**
(45) Date of publication and mention of the grant of the patent: **04.12.2024**
(21) Application number: 21180948.8
(22) Date of filing: 22.06.2021
(51) Int. Cl.: G06F 3/0481, G06F 3/0486

(54) **SMALL-SCREEN WINDOW DISPLAY METHOD, DEVICE AND STORAGE MEDIUM**
VERFAHREN, VORRICHTUNG UND SPEICHERMEDIUM ZUR KLEINBILDSCHIRMFENSTERANZEIGE
DISPOSITIF D'AFFICHAGE DE FENÊTRE À PETIT ÉCRAN, PROCÉDÉ ET SUPPORT D'INFORMATIONS

(30) Priority: 04.11.2020 CN 202011219247
(43) Date of publication of application: 11.05.2022
(73) Proprietor: Beijing Xiaomi Mobile Software Co., Ltd., Beijing 100085 (CN)
(72) Inventor: LI, Bowen, Beijing, 100085 (CN); QU, Jianjiang, Beijing, 100085 (CN); LUO, Xi, Beijing, 100085 (CN); YANG, Huiying, Beijing, 100085 (CN)
(74) Representative: dompatent von Kreisler Selting Werner - Partnerschaft von Patent- und Rechtsanwälten mbB

(56) References cited:
- US-A1- 2014 310 642
- US-A1- 2014 325 430
- US-A1- 2014 325 438
- US-A1- 2017 090 710

## Description

### BACKGROUND

In related technologies, Freeform provides a terminal with a floating small-screen window capability, so as to allow the terminal to display an application in the form of a preset window.

US 2014/325438 A1 relates to moving a video program window and performing an action depending on the location moved to.

### SUMMARY

In order to overcome the problems in the related art, the present disclosure provides a small-screen window display method, device and storage median according to independent claims 1, 5, 9, 10

Various embodiments of the present disclosure can have one or more of the following advantages.

The drag position corresponding to the time when the small-screen window is dragged to stop is determined by dragging a designated area of the small-screen window displaying the application interface on the terminal, and based on the drag position, the small-screen window is controlled to perform the function corresponding to the drag stop position. In this way, the drag event received by the application interface can be obtained directly, and the small-screen window can be controlled to perform different functions corresponding to different drag stop positions, thereby improving the operability of the small-screen window and the convenience of operation.

It should be understood that the above general description and the following detailed description are only exemplary and explanatory, and cannot limit the present disclosure.

### BRIEF DESCRIPTION OF THE DRAWINGS

The drawings are incorporated herein into the specification and constitute a part of the disclosure, show embodiments in accordance with the present disclosure, and are together with the specification used to explain the principle of the present disclosure.
FIG. 1 is a flowchart showing a small-screen window display method according to some embodiments.
FIG. 2 is a flowchart showing a small-screen window display method according to another exemplary embodiment of the present disclosure.
FIG. 3 is a flowchart showing a small-screen window display method according to another exemplary embodiment of the present disclosure.
FIG. 4 is a flowchart showing a small-screen window display method according to another exemplary embodiment of the present disclosure.
FIG. 5 is a flowchart showing a small-screen window display method according to another exemplary embodiment of the present disclosure.
FIG. 6 is a flowchart showing a small-screen window display method according to another exemplary embodiment of the present disclosure.
FIG. 7 is a flowchart showing a small-screen window display method according to another exemplary embodiment of the present disclosure.
FIG. 8A is a schematic diagram showing applications of a small-screen window display method according to some embodiments of the present disclosure.
FIG. 8B is a schematic diagram showing applications of a small-screen window display method according to some embodiments of the present disclosure.
FIG. 8C is a schematic diagram showing applications of a small-screen window display method according to some embodiments of the present disclosure.
FIG. 8D is a schematic diagram showing applications of a small-screen window display method according to some embodiments of the present disclosure.
FIG. 8E is a schematic diagram showing applications of a small-screen window display method according to some embodiments of the present disclosure.
FIG. 8F is a schematic diagram showing applications of a small-screen window display method according to some embodiments of the present disclosure.
FIG. 8G is a schematic diagram showing applications of a small-screen window display method according to some embodiments of the present disclosure.
FIG. 9 is a block diagram showing a small-screen window display device according to some embodiments of the present disclosure.
FIG. 10 is a block diagram showing a small-screen window display device according to another exemplary embodiment of the present disclosure.
FIG. 11 is a block diagram of a small-screen window display device according to another exemplary embodiment of the present disclosure;
FIG. 12 is a block diagram showing a small-screen window display device according to some embodiments.

### DETAILED DESCRIPTION

Exemplary embodiments will be described in detail herein, and examples thereof are shown in the accompanying drawings. When the following description refers to the drawings, unless otherwise indicated, the same numbers in different drawings indicate the same or similar elements. The implementations described in the following exemplary embodiments do not represent all implementations consistent with the present disclosure. Rather, they are merely examples of devices and methods consistent with some aspects of the present disclosure as detailed in the appended claims.

Mobile terminals are increasingly becoming an indispensable part of people's daily routine. People use mobile terminals to obtain various information anytime and anywhere in their daily work and life, so as to meet the needs of life, entertainment, office and other aspects. The functions of mobile terminals are becoming more and more abundant, more and more intelligent and humane.

In the use of a smart terminal, there may be a use scenario where multi-window applications are displayed. When the user uses the application on the mobile terminal, other applications are displayed in other display windows according to the needs of use. Freeform provides the terminal with the floating small-screen window capability, so as to allow the terminal to display the application in the form of a preset window. Freeform is a multi-window mode introduced by the Android system. In the Freeform mode, the Freeform window can be zoomed and moved freely. The FreeForm window contains complete features of an activity window, such as activity, window, focus, input, etc. The Freeform window can also be displayed on another application after the user performs operations such as opening and closing. In the Android system, the difference between the Freeform windows and the Activity window is that they are in different Stacks of ActivityManager services, and different stacks are used to implement display and scheduling functions.

In a Freeform mode, the user can move the small-screen window by dragging a designated area of the small-screen window. For example, by dragging the upper slide bar of the small-screen window, the display position of the small-screen window can be changed to realize the movement of the small-screen window. However, in the related technology, the small-screen window is dragged, the drag event received by the application is forwarded to the system server, and the small-screen window is transferred to the corresponding position. This can only realize the movement of a small-screen window, triggering few functions.

Therefore, the present disclosure provides a small-screen window display method. By dragging a designated area of the small-screen window displaying the application interface on the terminal, the drag position can be determined corresponding to a time when the small-screen window is dragged to stop, and the small-screen window is controlled based on the drag position to perform the function corresponding to the drag stop position.

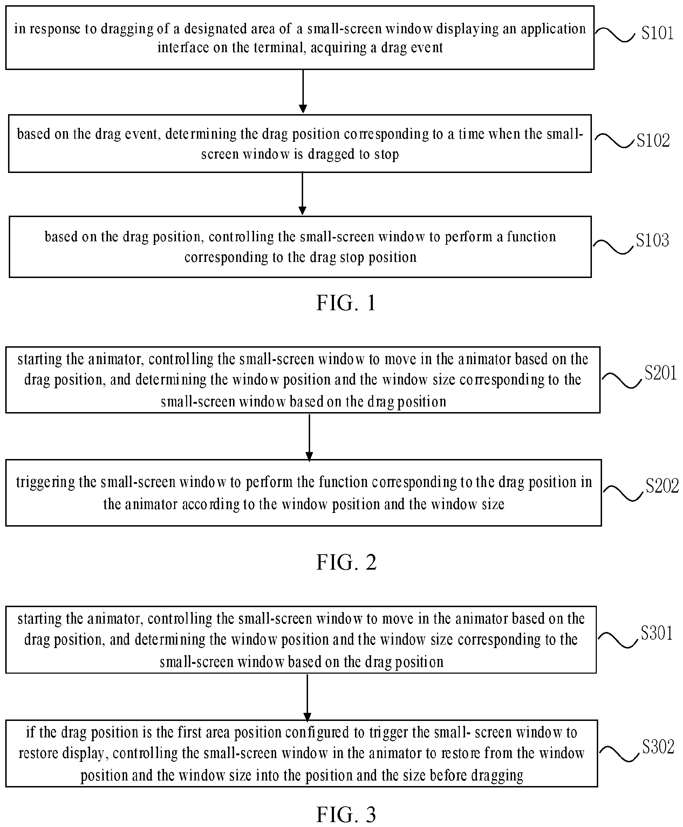

FIG. 1 is a flowchart showing a small-screen window display method according to some embodiments. As shown in FIG. 1, the small-screen window display method is used in a terminal and includes the following steps.

In step S 101, in response to dragging of a designated area of a small-screen window displaying an application interface on the terminal, a drag event is acquired.

In step S 102, based on the drag event, the drag position is determined corresponding to a time when the small-screen window is dragged to stop. In other words, in step S102, based on the drag event, the drag position is determined when the small-screen window is dragged to stop.

In step S103, based on the drag position, the small-screen window is controlled to perform a function corresponding to the drag stop position.

In some embodiments of the present disclosure, the designated area of the small-screen window displaying the application interface on the terminal is dragged, wherein the designated area can be a lower slide bar on an edge of the small-screen window, or an upper slide bar on an edge of the small-screen window, or other designated areas. The user contacts and drags the designated area in the small-screen window of the application interface. In the Freeform mode, the event is obtained by registering PointerEventListener in the system_server, and it is determined whether the event is a drag event in the designated area.

Based on the drag event of the small-screen window of the application interface, the drag position is determined corresponding to the time when the small-screen window is dragged to stop. It can be understood, the small-screen window performs different functions in different positions. For example, the small-screen window performs display in different display sizes, performs display in different positions, the small-screen window is restored to the size and the position before dragging, or the small-screen window is closed. Based on the drag position corresponding to the time when the small-screen window is dragged to stop, the small-screen window is controlled to perform the function corresponding to the drag stop position.

According to some embodiments of the present disclosure, by dragging the designated area of the small-screen window displaying the application interface on the terminal, the drag position is determined corresponding to a time when the small-screen window is dragged to stop, and the small-screen window is controlled based on the drag position to perform the function corresponding to the drag stop position. In this way, the drag event received by the application interface can be obtained directly, and the small-screen window is controlled to perform different functions corresponding to different drag stop positions, improving the operation convenience of small-screen window.

FIG. 2 is a flowchart showing a small-screen window display method according to another exemplary embodiment of the present disclosure. As shown in FIG. 2, the small-screen window display method includes the following steps.

In step S201, the animator is started, the small-screen window is controlled to move in the animator based on the drag position, and the window position and window size corresponding to the small-screen window are determined based on the drag position.

In step S202, the small-screen window is triggered to perform the function corresponding to the drag position in the animator according to the window position and the window size.

In some embodiments of the present disclosure, the designated area of the small-screen window displaying the application interface on the terminal is dragged, and the drag event is directly obtained. Based on the obtained drag event, the drag position is determined corresponding to the time when the small-screen window is dragged to stop.

In the Freeform mode, the animator is started, and the animator is used to put the determined window position and window size into effect. The movement of the small-screen window is controlled in the animator based on the drag position, and the window position and the window size corresponding to the small-screen window are determined based on the drag position. The small-screen window is trigged to perform the function corresponding to the drag position in the animator according to the window position and the window size.

According to some embodiments of the present disclosure, the animator is started in the Freeform mode, the determined window position and window size are put into effect by the animator, and the small-screen window is controlled to perform a function corresponding to the drag stop position.

FIG. 3 is a flowchart showing a small-screen window display method according to another exemplary embodiment of the present disclosure. As shown in FIG. 3, the small-screen window display method includes the following steps.

In step S301, the animator is started, the small-screen window is controlled to move in the animator based on the drag position, and the window position and the window size corresponding to the small-screen window are determined based on the drag position.

In step S302, if the drag position is the first area position configured to trigger the small-screen window to restore display, the small-screen window is controlled in the animator to restore from the window position and the window size into the position and the size before dragging.

In some embodiments of the present disclosure, the designated area of the small-screen window displaying the application interface on the terminal is dragged, and the drag event is directly obtained. Based on the obtained drag event, the drag position is determined corresponding to the time when the small-screen window is dragged to stop. In the Freeform mode, the animator is started, and the animator is used to put the determined window position and window size into effect.

The movement of the small-screen window is controlled in the animator based on the drag position, and the window horizontal and vertical display ratios, the display position, and the window size corresponding to the small-screen window are determined based on the drag position.

If the drag position corresponding to the time when the small-screen window is dragged to stop is the first area position configured to trigger the small-screen window to restore display, the small-screen window is controlled in the animator to restore from the window position and the window size into the position and the size before dragging.

According to some embodiments of the present disclosure, the animator is started in the Freeform mode, and the determined window position and window size are put into effect by the animator. When the drag position corresponding to the time when the small-screen window is dragged to stop is the first area positon used to trigger the small-screen window to restore display, the small-screen window is controlled in the animator to restore from the window position and the window size to the position and the size before dragging.

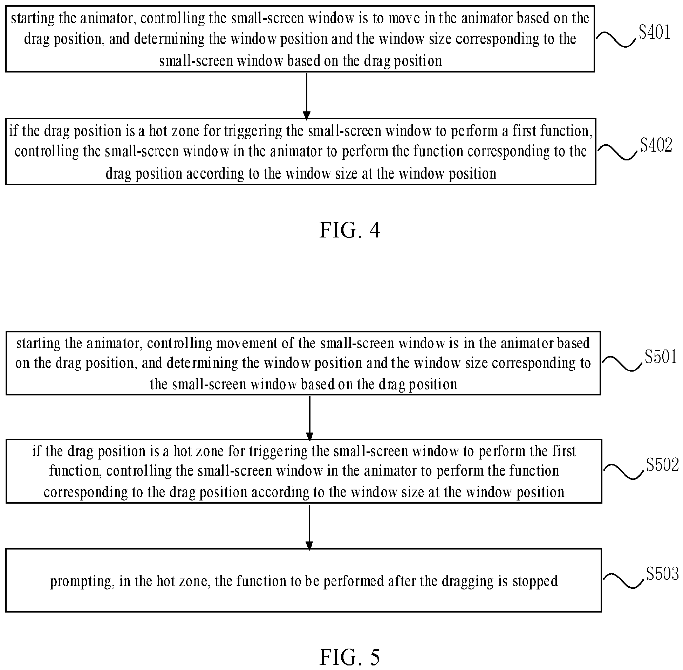

FIG. 4 is a flowchart showing a small-screen window display method according to another exemplary embodiment of the present disclosure. As shown in FIG. 4, the small-screen window display method includes the following steps.

In step S401, the animator is started, the small-screen window is controlled to move in the animator based on the drag position, and the window position and the window size corresponding to the small-screen window are determined based on the drag position.

In step S402, if the drag position is a hot zone for triggering the small-screen window to perform a first function, the small-screen window is controlled in the animator to perform the function corresponding to the drag position according to the window size at the window position.

In some embodiments of the present disclosure, the designated area of the small-screen window displaying the application interface on the terminal is dragged, and the drag event is directly obtained. Based on the obtained drag event, the drag position corresponding to the time when the small-screen window is dragged to stop can be determined. In the Freeform mode, the animator is started, and the animator can be used to put the determined window position and window size into effect.

The movement of the small-screen window is controlled in the animator based on the drag position, and the window horizontal and vertical display ratios, the display position, and the window size corresponding to the small-screen window are determined based on the drag position. For example, by increasing damping, the zoom ratio can be calculated according to the position change in the y-direction of the small-screen window and the current position in the y-direction of the small-screen window, and the window position can be calculated according to the position change in the x-direction of the small-screen window.

If the drag position is the hot zone used to trigger the small-screen window to perform the first function, the hot zone displayed on the terminal can be preset. When the small-screen window is dragged into the hot zone, the hot zone will be rendered gradually to display, triggering operations associated with the small-screen window. In the animator, the small-screen window is controlled to perform the function corresponding to the drag position at the window position according to the window size. For example, the small-screen window is displayed in a hanging-up display with a determined small-screen window size within the hot zone.

According to some embodiments of the present disclosure, the animator is started in the Freeform mode, and the determined window position and window size are put into effect by the animator. If the drag position corresponding to the time when the small-screen window is dragged to stop is the hot zone for triggering the small-screen window to perform the first function, the small-screen window is controlled in the animator to perform the function corresponding to the drag position according to the window size at the window position.

FIG. 5 is a flowchart showing a small-screen window display method according to another exemplary embodiment of the present disclosure. As shown in FIG. 5, the small-screen window display method includes the following steps.

In step S501, the animator is started, movement of the small-screen window is controlled in the animator based on the drag position, and the window position and the window size corresponding to the small-screen window are determined based on the drag position.

In step S502, if the drag position is a hot zone for triggering the small-screen window to perform the first function, the small-screen window is controlled in the animator to perform the function corresponding to the drag position according to the window size at the window position.

In step S503, the function to be performed after the dragging is stopped is prompted in the hot zone.

In some embodiments of the present disclosure, the designated area of the small-screen window displaying the application interface on the terminal is dragged, and the drag event is directly obtained. Based on the obtained drag event, the drag position corresponding to the time when the small-screen window is dragged to stop can be determined. In the Freeform mode, the animator is started, and the animator is used to put the determined window position and window size into effect.

The movement of the small-screen window is controlled in the animator based on the drag position, and the window horizontal and vertical display ratios, the display position, and the window size corresponding to the small-screen window are determined based on the drag position.

If the drag position is the hot zone used to trigger the small-screen window to perform the first function, the hot zone displayed on the terminal can be preset. When the small-screen window is dragged into the hot zone, the hot zone will be rendered gradually to display, triggering operations associated with the small-screen window. In the animator, the small-screen window is controlled to perform the function corresponding to the drag position according to the window size at the window position. For example, the small-screen window is in a hanging-up display according to a determined small-screen window size within the hot zone.

A prompt is displayed in the hot zone, prompting the function to be performed after the dragging is stopped. For example, when the drag position is the hot zone used to trigger the small-screen window to perform the first function, the prompt is displayed, prompting that the drag stop position is in a rendered display area, and the small-screen window will be in a hanging-up display at the drag stop position according to a determined window size, which is convenient for the user to drag and adjust the small-screen window.

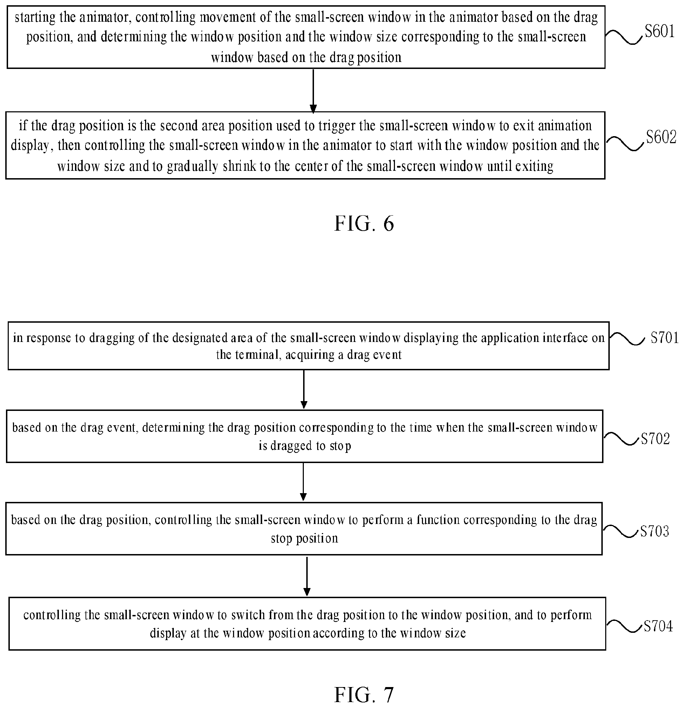

FIG. 6 is a flowchart showing a small-screen window display method according to another exemplary embodiment of the present disclosure. As shown in FIG. 6, the small-screen window display method includes the following steps.

In step S601, the animator is started, movement of the small-screen window is controlled in the animator based on the drag position, and the window position and the window size corresponding to the small-screen window are determined based on the drag position.

In step S602, if the drag position is the second area position used to trigger the small-screen window to exit animation display, then the small-screen window is controlled in the animator to start with the window position and the window size and to gradually shrink to the center of the small-screen window until exiting.

In some embodiments of the present disclosure, the designated area of the small-screen window displaying the application interface on the terminal is dragged, and the drag event is directly obtained. Based on the obtained drag event, the drag position corresponding to the time when the small-screen window is dragged to stop can be determined. In the Freeform mode, the animator is started, and the animator is used to put the determined window position and window size into effect.

The movement of the small-screen window is controlled in the animator based on the drag position, and the window horizontal and vertical display ratios, the display position, and the window size corresponding to the small-screen window are determined based on the drag position.

If the drag position is the second area position used to trigger the small-screen window to exit animation display, the small-screen window is controlled in the animator to start with the window position and the window size and to gradually shrink to the center of the small-screen window until exiting. The second area position is position in the display interface that is different from the hot zone. When the drag position is the second area position, the small-screen window will no longer be displayed, but will exit display, thereby being closed.

According to embodiments of the present disclosure, the determined window position and window size are put into effect by the animator, and the position corresponding to the time when the small-screen window is dragged to stop is the second area position for exiting the animation display, the small-screen window is closed, thus exiting display.

FIG. 7 is a flowchart showing a small-screen window display method according to another exemplary embodiment of the present disclosure. As shown in FIG. 7, the small-screen window display method includes the following steps.

In step S701, in response to dragging of the designated area of the small-screen window displaying the application interface on the terminal, a drag event is acquired.

In step S702, based on the drag event, the drag position corresponding to the time when the small-screen window is dragged to stop can be determined.

In step S703, based on the drag position, the small-screen window is controlled to perform a function corresponding to the drag stop position.

In step S704, the small-screen window is controlled to switch from the drag position to the window position, and to perform display at the window position according to the window size.

In some embodiments of the present disclosure, the designated area of the small-screen window displaying the application interface on the terminal is dragged, and the drag event is directly obtained. Based on the obtained drag event, the drag position is determined corresponding to the time when the small-screen window is dragged to stop.

Based on the drag event of the small-screen window of the application interface, the drag position is determined corresponding to the time when the small-screen window is dragged to stop. It should be understood, the small-screen window performs different functions in different positions. For example, the small-screen window is displayed in different display sizes, at different positions, and the small-screen window is restored to the size and position before being dragged, or the small-screen window is closed. Based on the drag position corresponding to the time when the small-screen window is dragged to stop, the small-screen window is controlled to perform the function corresponding to the drag stop position. The small-screen window is controlled to switch from the drag position to the window position, and to perform display at the window position according to the window size.

According to some embodiments of the present disclosure, the designated area of the small-screen window displaying the application interface on the terminal is dragged, and the drag position, corresponding to the time when the small-screen window is dragged to stop, is determined. Based on the drag position, the small-screen window is controlled to perform the function corresponding to the drag stop position. Thus, the drag event received by the application interface can be obtained directly, and the small-screen window is displayed at the window position according to the window size. It is realized that the designated area of the small-screen window displaying the application interface on the terminal is dragged, and the window size can be changed according to the drag position, leading to flexible and convenient operations.

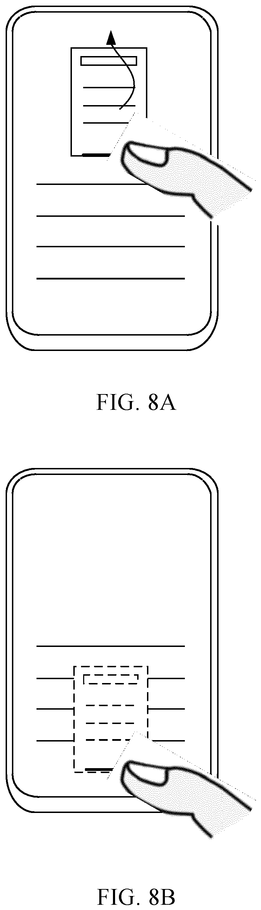

FIGs. 8A - 8G are schematic diagrams showing applications of a small-screen window display method according to some embodiments of the present disclosure. Referring to FIGs. 8A - 8G, FIG. 8A shows that the lower slide bar of the small-screen window displaying the application interface on the terminal is dragged, and the small-screen window is dragged to any position, thus directly obtaining the drag event received by the application interface. During the dragging process, the small-screen window can change the window size according to the drag position.

FIG. 8B shows that the lower slide bar of the small-screen window of the application interface is dragged, causing the small-screen window to be dragged from the initial position to the first area position for triggering the small-screen window to restore display.

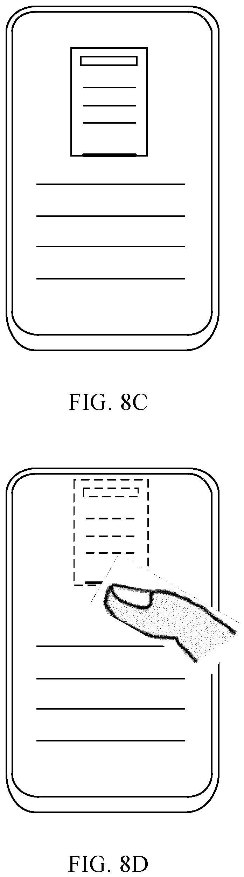

FIG. 8C shows that after the small-screen window is dragged from the initial position to the first area position used to trigger the small-screen window to restore display, and after the dragging is stopped, the small-screen window is controlled from the window position and the window size to the position and size before being dragged, because the drag position corresponding to the time when the dragging stops is the first area position.

FIG. 8D shows that the lower slide bar of the small-screen window of the application interface is dragged, causing the small-screen window to be dragged from the initial position to the second area position for triggering the small-screen window to exit the animation display.

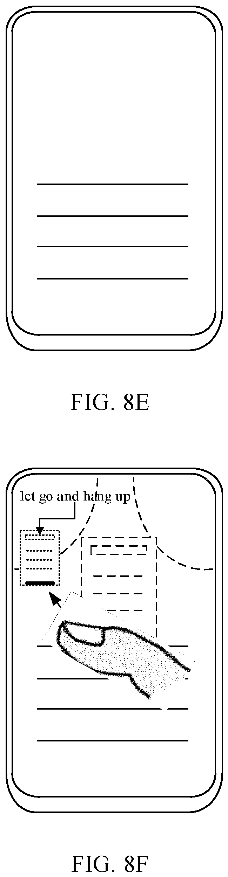

FIG. 8E shows that after the small-screen window is dragged from the initial position to the second area position used to trigger the small-screen window to exit the animation display, and after the dragging stops, the small-screen window is controlled to start with the window position and the window size and to gradually shrink to the center of the small-screen window until it exits, because the drag position corresponding to the time when the dragging stops is the second area position.

FIG. 8F shows that the lower slide bar of the small-screen window of the application interface is dragged, causing the small-screen window to be dragged from the initial position to the hot zone used to trigger the small-screen window to perform the first function. The hot zone refers to the area indicated by the dashed line at a top edge position of the terminal in FIG. 8B. A prompt of "let go and hang up" is displayed in the hot zone. During the dragging process, the small-screen window can change the window size according to the drag position.

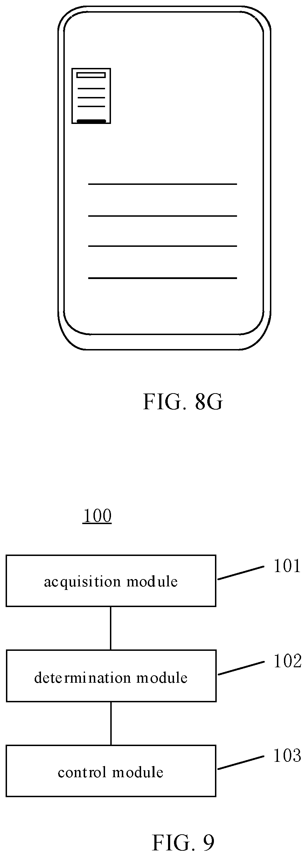

FIG. 8G shows that when the lower slide bar of the small-screen window of the application interface is dragged into the hot zone used to trigger the small-screen window to perform the first function, the dragging is stopped, and when the drag stop position is located within the hot zone, the small-screen window will be fixedly displayed at the drag stop position according to the display size when the dragging stops.

According to some embodiments of the present disclosure, the designated area of the small-screen window displaying the application interface on the terminal is dragged, so as to determine the drag position corresponding to the time when the small-screen window is dragged to stop. Then, based on the drag position, the small-screen window is controlled to perform the function corresponding to the drag stop position, leading to directly obtain the drag event received by the application interface and display the small-screen window at the window position according to the window size. It is realized that the designated area of the small-screen window displaying the application interface on the terminal is dragged, and the window size can be changed according to the drag position, thus providing flexible and convenient operations.

Based on the same concept, embodiments of the present disclosure also provide a small-screen window display device.

It can be understood that, in order to implement the above-mentioned functions, the small-screen window display device provided in embodiments of the present disclosure includes hardware structures and/or software modules corresponding to various function. In combination with the units and algorithm steps of the examples disclosed in embodiments of the present disclosure, embodiments of the present disclosure can be implemented in the form of hardware or a combination of hardware and computer software. Whether a certain function is executed by hardware or computer software-driven hardware depends on the specific application and design constraints of the technical solution. Those skilled in the art can use different methods for each specific application to implement the described functions, but such implementation should not be considered as going beyond the scope of the technical solutions of embodiments of the present disclosure.

FIG. 9 is a block diagram showing a small-screen window display device according to some embodiments of the present disclosure. Referring to FIG. 9, the small-screen window display device 100 is applied to a terminal, and includes an acquisition module 101, a determination module 102, and a control module 103.

The acquisition module 101 is configured to acquire a drag event in response to the dragging of a designated area of a small-screen window displaying an application interface on a terminal.

The determination module 102 is configured to determine the drag position corresponding to the time when the small-screen window is dragged to stop based on the drag event.

The control module 103 is configured to control the small-screen window to perform a function corresponding to the drag stop position based on the drag position.

In some embodiments, the control module 103 controls the small-screen window to perform a function corresponding to the dragging stop position based on the drag position in the following manner comprising:

starting the animator, controlling the movement of the small-screen window in the animator based on the drag position, and determining the window position and the window size corresponding to the small-screen window based on the drag position; and further triggering the small-screen window to perform a function corresponding to the drag position in the animator according to the window position and the window size.

In some embodiments, the control module 103 triggers the small-screen window to perform the function corresponding to the drag position in the animator according to the window position and the window size in the following way comprising:

if the drag position is the first area position used to trigger the the small-screen window to restore display, controlling the small-screen window in the animator to restore from the window position and the window size into the position and the size before being dragged.

In some embodiments, the control module 103 triggers the small-screen window to perform the function corresponding to the drag position in the animator according to the window position and the window size in the following way comprising:

if the drag position is the hot zone used to trigger the small-screen window to perform the first function, controlling the small-screen window in the animator to perform the function corresponding to the drag position at the window position according to the window size.

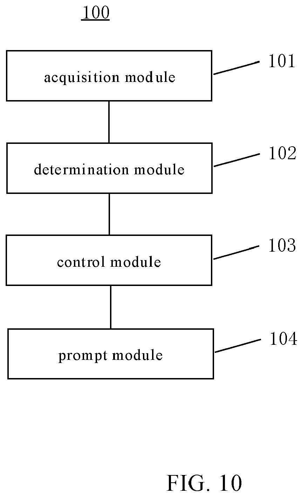

FIG. 10 is a block diagram showing a small-screen window display device according to another exemplary embodiment of the present disclosure. Referring to FIG. 10, the small-screen window display device 100 further includes a prompt module 104.

The prompt module 104 is configured to prompt, in the hot zone, the function to be performed after the dragging is stopped, if the drag position is the hot zone used to trigger the small-screen window to perform the first function.

In some embodiments, the control module 103 triggers the small-screen window to perform the function corresponding to the drag position in the animator according to the window position and window size in the following way comprising: if the drag position is the second area position used to trigger the small-screen window to exit the animation display, controllling the small-screen window in the animator to start with the window position and the window size and to gradually shrink to the center of the small-screen window until it exits.

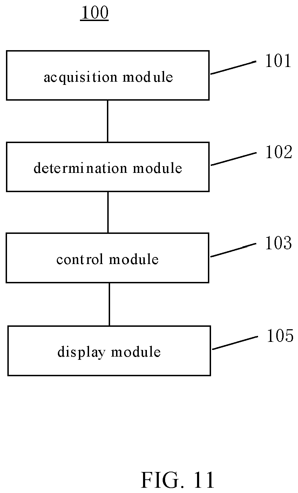

FIG. 11 is a block diagram showing a small-screen window display device according to another exemplary embodiment of the present disclosure. Referring to FIG. 11, the small-screen window display device 100 further includes a display module 105.

The display module 105 is used to control the small-screen window to switch from the drag position to the window position, and to perform display at the window position according to the window size.

Regarding the device in the foregoing embodiments, the specific manner in which each module performs the operation has been described in detail in the method embodiments, and detailed description will not be given here.

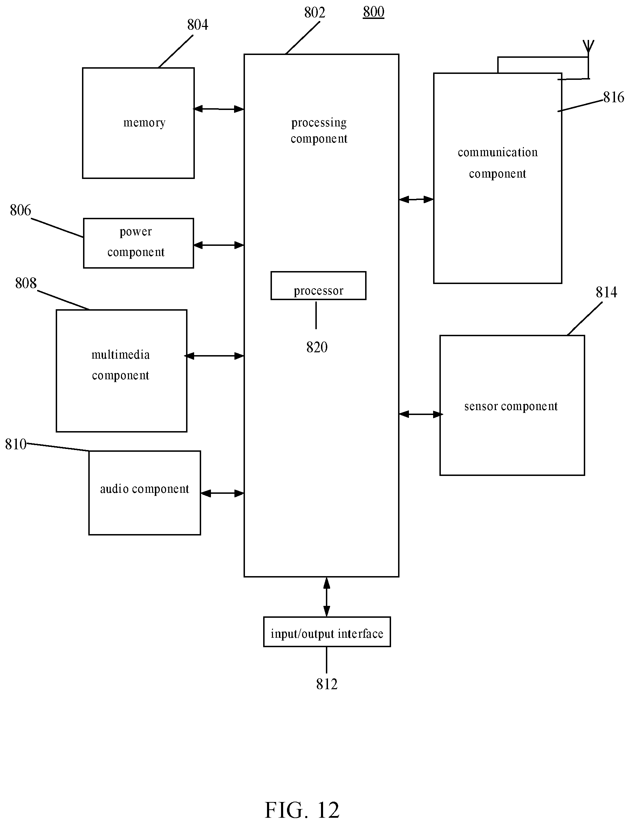

FIG. 12 is a block diagram showing a small-screen window display device 800 according to some embodiments. For example, the device 800 may be a mobile phone, a computer, a digital broadcasting terminal, a messaging device, a game console, a tablet device, a medical device, a fitness device, a personal digital assistant, etc.

With reference to FIG. 12, the device 800 may include one or more of the following components: a processing component 802, a memory 804, a power component 806, a multimedia component 808, an audio component 810, an input/output (I/O) interface 812, a sensor component 814, and a communication component 816.

The processing component 802 generally controls the overall operations of the device 800, such as operations associated with display, telephone calls, data communications, camera operations, and recording operations. The processing component 802 may include one or more processors 820 to execute instructions, so as to complete all or part of the steps of the foregoing method. In addition, the processing component 802 may include one or more modules to facilitate the interaction between the processing component 802 and other components. For example, the processing component 802 may include a multimedia module to facilitate the interaction between the multimedia component 808 and the processing component 802.

The memory 804 is configured to store various types of data to support operations in the device 800. Examples of such data include instructions for any application or method operating on the device 800, contact data, phone book data, messages, pictures, videos, etc. The memory 804 can be implemented by any type of volatile or non-volatile storage device or their combination, such as static random access memory (SRAM), electrically erasable programmable read-only memory (EEPROM), erasable and programmable read-only memory (EPROM), programmable read-only memory (PROM), read-only memory (ROM), magnetic memory, flash memory, magnetic disk or optical disk.

The power component 806 provides power to various components of the device 800. The power component 806 may include a power management system, one or more power supplies, and other components associated with generating, managing, and distributing power for the device 800.

The multimedia component 808 includes a screen that provides an output interface between the device 800 and the user. In some embodiments, the screen may include a liquid crystal display (LCD) and a touch panel (TP). In some embodiments, an organic light-emitting diode (OLED) display can be employed.

If the screen includes a touch panel, the screen may be implemented as a touch screen to receive input signals from the user. The touch panel includes one or more touch sensors to sense touch, sliding, and gestures on the touch panel. The touch sensor may not only sense the boundary of the touch or sliding action, but also detect the duration and pressure related to the touch or sliding operation. In some embodiments, the multimedia component 808 includes a front camera and/or a rear camera. When the device 800 is in an operation mode, such as a shooting mode or a video mode, the front camera and/or the rear camera can receive external multimedia data. Each of the front camera and the rear camera can be a fixed optical lens system or have focal length and optical zooming capabilities.

The audio component 810 is configured to output and/or input audio signals. For example, the audio component 810 includes a microphone (MIC). When the device 800 is in an operation mode, such as a call mode, a recording mode, and a voice recognition mode, the microphone is configured to receive external audio signals. The received audio signal may be further stored in the memory 804 or transmitted via the communication component 816. In some embodiments, the audio component 810 further includes a speaker for outputting audio signals.

The I/O interface 812 provides an interface between the processing component 802 and a peripheral interface module. The above-mentioned peripheral interface module may be a keyboard, a click wheel, a button, and the like. These buttons may include, but are not limited to, home button, volume button, start button, and locking button.

The sensor component 814 includes one or more sensors for providing the device 800 with various aspects of status assessment. For example, the sensor component 814 can detect the open/close state of the device 800 and the relative positioning among components, such as the display and the keypad of the device 800. The sensor component 814 can also detect change in the position of the device 800 or a component of the device 800, presence or absence of contact between the user and the device 800, orientation or acceleration/deceleration of the device 800, and change in the temperature of the device 800. The sensor component 814 may include a proximity sensor, configured to detect the presence of nearby objects when there is no physical contact. The sensor component 814 may also include a light sensor, such as a CMOS or CCD image sensor, for use in imaging applications. In some embodiments, the sensor component 814 may also include an acceleration sensor, a gyroscope sensor, a magnetic sensor, a pressure sensor, or a temperature sensor.

The communication component 816 is configured to facilitate wired or wireless communication between the device 800 and other devices. The device 800 can access a wireless network based on a communication standard, such as Wi-Fi, 2G, 3G, 4G, or 5G, or a combination thereof. In some embodiments, the communication component 816 receives a broadcast signal or broadcast related information from an external broadcast management system via a broadcast channel. In some embodiments, the communication component 816 further includes a near field communication (NFC) module to facilitate short-range communication. For example, the NFC module can be implemented based on radio frequency identification (RFID) technology, infrared data association (IrDA) technology, ultra-wideband (UWB) technology, Bluetooth (BT) technology and other technologies.

In some embodiments, the device 800 may be implemented by one or more application specific integrated circuits (ASIC), digital signal processors (DSP), digital signal processing devices (DSPD), programmable logic devices (PLD), field programmable gate array (FPGA), controller, microcontroller, microprocessor, or other electronic components, for performing the above-mentioned methods.

In some embodiments, there is also provided a non-transitory computer-readable storage medium containing instructions, such as the memory 804 containing instructions, which instructions can be executed by the processor 820 of the device 800 to complete the foregoing method. For example, the non-transitory computer-readable storage medium may be ROM, random access memory (RAM), CD-ROM, magnetic tape, floppy disk, optical data storage device, etc.

The various device components, units, circuits, blocks, or portions may have modular configurations, or are composed of discrete components, but nonetheless may be referred to as "modules," "components" or "circuits" in general. In other words, the components, units, circuits, blocks, or portions referred to herein may or may not be in modular forms.

The various device components, units, blocks, portions, or modules may be realized with hardware, software, or a combination of hardware and software.

In some embodiments of the present disclosure, the terms "installed," "connected," "coupled," "fixed" and the like shall be understood broadly, and can be either a fixed connection or a detachable connection, or integrated, unless otherwise explicitly defined. These terms can refer to mechanical or electrical connections, or both. Such connections can be direct connections or indirect connections through an intermediate medium. These terms can also refer to the internal connections or the interactions between elements. The specific meanings of the above terms in some embodiments of the present disclosure can be understood by those of ordinary skill in the art on a case-by-case basis.

In the description of the present disclosure, the terms "one embodiment," "some embodiments," "example," "specific example," or "some examples," and the like can indicate a specific feature described in connection with the embodiment or example, a structure, a material or feature included in at least one embodiment or example. In some embodiments of the present disclosure, the schematic representation of the above terms is not necessarily directed to the same embodiment or example.

Moreover, the particular features, structures, materials, or characteristics described can be combined in a suitable manner in any one or more embodiments or examples. In addition, various embodiments or examples described in the specification, as well as features of various embodiments or examples, can be combined and reorganized.

In some embodiments, the control and/or interface software or app can be provided in a form of a non-transitory computer-readable storage medium having instructions stored thereon is further provided. For example, the non-transitory computer-readable storage medium can be a ROM, a CD-ROM, a magnetic tape, a floppy disk, optical data storage equipment, a flash drive such as a USB drive or an SD card, and the like.

Implementations of the subject matter and the operations described in this disclosure can be implemented in digital electronic circuitry, or in computer software, firmware, or hardware, including the structures disclosed herein and their structural equivalents, or in combinations of one or more of them. Implementations of the subject matter described in this disclosure can be implemented as one or more computer programs, i.e., one or more portions of computer program instructions, encoded on one or more computer storage medium for execution by, or to control the operation of, data processing apparatus.

Alternatively, or in addition, the program instructions can be encoded on an artificially-generated propagated signal, e.g., a machine-generated electrical, optical, or electromagnetic signal, which is generated to encode information for transmission to suitable receiver apparatus for execution by a data processing apparatus. A computer storage medium can be, or be included in, a computer-readable storage device, a computer-readable storage substrate, a random or serial access memory array or device, or a combination of one or more of them.

Moreover, while a computer storage medium is not a propagated signal, a computer storage medium can be a source or destination of computer program instructions encoded in an artificially-generated propagated signal. The computer storage medium can also be, or be included in, one or more separate components or media (e.g., multiple CDs, disks, drives, or other storage devices). Accordingly, the computer storage medium can be tangible.

The operations described in this disclosure can be implemented as operations performed by a data processing apparatus on data stored on one or more computer-readable storage devices or retracted from other sources.

The devices in this disclosure can include special purpose logic circuitry, e.g., an FPGA (field-programmable gate array), or an ASIC (application-specific integrated circuit). The device can also include, in addition to hardware, code that creates an execution environment for the computer program in question, e.g., code that constitutes processor firmware, a protocol stack, a database management system, an operating system, a cross-platform runtime environment, a virtual machine, or a combination of one or more of them. The devices and execution environment can realize various different computing model infrastructures, such as web services, distributed computing, and grid computing infrastructures.

A computer program (also known as a program, software, software application, app, script, or code) can be written in any form of programming language, including compiled or interpreted languages, declarative or procedural languages, and it can be deployed in any form, including as a stand-alone program or as a portion, component, subroutine, object, or other portion suitable for use in a computing environment. A computer program can, but need not, correspond to a file in a file system. A program can be stored in a portion of a file that holds other programs or data (e.g., one or more scripts stored in a markup language document), in a single file dedicated to the program in question, or in multiple coordinated files (e.g., files that store one or more portions, sub-programs, or portions of code). A computer program can be deployed to be executed on one computer or on multiple computers that are located at one site or distributed across multiple sites and interconnected by a communication network.

The processes and logic flows described in this disclosure can be performed by one or more programmable processors executing one or more computer programs to perform actions by operating on input data and generating output. The processes and logic flows can also be performed by, and apparatus can also be implemented as, special purpose logic circuitry, e.g., an FPGA, or an ASIC.

Processors or processing circuits suitable for the execution of a computer program include, by way of example, both general and special purpose microprocessors, and any one or more processors of any kind of digital computer. Generally, a processor will receive instructions and data from a read-only memory, or a random-access memory, or both. Elements of a computer can include a processor configured to perform actions in accordance with instructions and one or more memory devices for storing instructions and data.

Generally, a computer will also include, or be operatively coupled to receive data from or transfer data to, or both, one or more mass storage devices for storing data, e.g., magnetic, magneto-optical disks, or optical disks. However, a computer need not have such devices. Moreover, a computer can be embedded in another device, e.g., a mobile telephone, a personal digital assistant (PDA), a mobile audio or video player, a game console, a Global Positioning System (GPS) receiver, or a portable storage device (e.g., a universal serial bus (USB) flash drive), to name just a few.

Devices suitable for storing computer program instructions and data include all forms of non-volatile memory, media and memory devices, including by way of example semiconductor memory devices, e.g., EPROM, EEPROM, and flash memory devices; magnetic disks, e.g., internal hard disks or removable disks; magneto-optical disks; and CD-ROM and DVD-ROM disks. The processor and the memory can be supplemented by, or incorporated in, special purpose logic circuitry.

To provide for interaction with a user, implementations of the subject matter described in this specification can be implemented with a computer and/or a display device, e.g., a VR/AR device, a head-mount display (HMD) device, a head-up display (HUD) device, smart eyewear (e.g., glasses), a CRT (cathode-ray tube), LCD (liquid-crystal display), OLED (organic light emitting diode), TFT (thin-film transistor), plasma, other flexible configuration, or any other monitor for displaying information to the user and a keyboard, a pointing device, e.g., a mouse, trackball, etc., or a touch screen, touch pad, etc., by which the user can provide input to the computer.

Implementations of the subject matter described in this specification can be implemented in a computing system that includes a back-end component, e.g., as a data server, or that includes a middleware component, e.g., an application server, or that includes a front-end component, e.g., a client computer having a graphical user interface or a Web browser through which a user can interact with an implementation of the subject matter described in this specification, or any combination of one or more such back-end, middleware, or front-end components.

The components of the system can be interconnected by any form or medium of digital data communication, e.g., a communication network. Examples of communication networks include a local area network ("LAN") and a wide area network ("WAN"), an inter-network (e.g., the Internet), and peer-to-peer networks (e.g., ad hoc peer-to-peer networks).

While this specification contains many specific implementation details, these should not be construed as limitations on the scope of any claims, but rather as descriptions of features specific to particular implementations. Certain features that are described in this specification in the context of separate implementations can also be implemented in combination in a single implementation. Conversely, various features that are described in the context of a single implementation can also be implemented in multiple implementations separately or in any suitable subcombination.

Moreover, although features can be described above as acting in certain combinations and even initially claimed as such, one or more features from a claimed combination can in some cases be excised from the combination, and the claimed combination can be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing can be advantageous. Moreover, the separation of various system components in the implementations described above should not be understood as requiring such separation in all implementations, and it should be understood that the described program components and systems can generally be integrated together in a single software product or packaged into multiple software products.

As such, particular implementations of the subject matter have been described. Other implementations are within the scope of the following claims. In some cases, the actions recited in the claims can be performed in a different order and still achieve desirable results. In addition, the processes depicted in the accompanying figures do not necessarily require the particular order shown, or sequential order, to achieve desirable results. In certain implementations, multitasking or parallel processing can be utilized.

It is intended that the specification and embodiments be considered as examples only. Other embodiments of the disclosure will be apparent to those skilled in the art in view of the specification and drawings of the present disclosure. That is, although specific embodiments have been described above in detail, the description is merely for purposes of illustration. It should be appreciated, therefore, that many aspects described above are not intended as required or essential elements unless explicitly stated otherwise.

It should be understood that "a plurality" or "multiple" as referred to herein means two or more. "And/or," describing the association relationship of the associated objects, indicates that there may be three relationships, for example, A and/or B may indicate that there are three cases where A exists separately, A and B exist at the same time, and B exists separately. The character "/" generally indicates that the contextual objects are in an "or" relationship.

Moreover, the terms "first" and "second" are used for descriptive purposes only and are not to be construed as indicating or implying a relative importance or implicitly indicating the number of technical features indicated. Thus, elements referred to as "first" and "second" may include one or more of the features either explicitly or implicitly. In the description of the present disclosure, "a plurality" indicates two or more unless specifically defined otherwise.

Some other embodiments of the present disclosure can be available to those skilled in the art upon consideration of the specification and practice of the various embodiments disclosed herein. The present application is intended to cover any variations, uses, or adaptations of the present disclosure following general principles of the present disclosure and include the common general knowledge or conventional technical means in the art without departing from the present disclosure.

## Claims

1. A small-screen window display method, applied to a terminal and comprising:
acquiring (S101) a drag event in response to dragging a designated area of a small-screen window displaying an application interface on the terminal;
determining (S102), based on the drag event, a drag position corresponding to a time when the small-screen window is dragged to stop;
starting an animator (S201, S301, S401, S501, S601), controlling movement of the small-screen window in the animator based on the drag position, and determining a display size of the small-screen window at the drag position;
in response that the drag position is in a hot zone configured to trigger the small-screen window to perform a first function (S502), prompting, in the hot zone, a function to be performed after the dragging is stopped (S503);
in response to the prompting, controlling the small-screen window in the animator to be displayed fixedly according to the display size at the drag position;
determining a window size and a window position corresponding to the small-screen window based on the drag position (S601); and
controlling the small-screen window in the animator to start with the window position and the window size and to zoom out toward a center of the small-screen window until exiting, if the drag position is a second area position configured to trigger the small-screen window to exit animation display (S602).

2. The small-screen window display method according to claim 1, further comprising:
controlling the small-screen window in the animator to restore from the window position and the window size into a position and a size before dragging, if the drag position is a first area position configured to trigger the small-screen window to restore display (S302).

3. The small-screen window display method according to claim 1, further comprising:
controlling the small-screen window in the animator to perform a function corresponding to the drag position according to the window size and the window position, if the drag position is in the hot zone (S402).

4. The small-screen window display method according to claim 1, further comprising:
controlling (S704) the small-screen window to switch from the drag position to the window position, and to perform display according to the window size at the window position.

5. A small-screen window display device, applied to a terminal and comprising:
an acquisition circuit (101), configured to acquire a drag event in response to dragging a designated area of a small-screen window displaying an application interface on the terminal (5101);
a determination circuit (102), configured to determine, based on the drag event, a drag position corresponding to a time when the small-screen window is dragged to stop (S102); and
a control circuit (103), configured to start an animator (S201, S301, S401, S501, S601), control movement of the small-screen window in the animator based on the drag position, and determine a display size of the small-screen window at the drag position; and
a prompt circuit (104), configured to:
in response that the drag position is in a hot zone configured to trigger the small-screen window to perform a first function (S502), prompt, in the hot zone, a function to be performed after the dragging is stopped (S503), and in response to the prompt, control the small-screen window in the animator to be displayed fixedly according to the display size at the drag position;
wherein the control circuit (103) is further configured to determine a window size and a window position corresponding to the small-screen window based on the drag position (S601); and
control the small-screen window in the animator to start with the window position and the window size and to zoom out toward a center of the small-screen window until exiting, if the drag position is a second area position configured to trigger the small-screen window to exit animation display (S602).

6. The small-screen window display device according to claim 5, wherein the control circuit (103) is further configured to:
control the small-screen window in the animator to restore from the window position and the window size into a position and a size before dragging, if the drag position is a first area position configured to trigger the small-screen window to restore display (S302).

7. The small-screen window display device according to claim 5, wherein the control circuit (103) is further configured to:
control the small-screen window in the animator to perform a function corresponding to the drag position according to the window size at the window position, if the drag position is in the hot zone (S402).

8. The small-screen window display device according to any of claims 5 to 7, wherein
the small-screen window display device further comprises:
a display circuit (105), configured to control the small-screen window to switch from the drag position to the window position, and to perform display according to the window size at the window position (S704).

9. A small-screen window display device (800), comprising:
a processor (820); and
memory (804), configured to store instructions executable by the processor,
wherein the processor is configured to perform the small-screen window display method according to any one of claims 1 to 4.

10. A non-transitory computer-readable storage medium having instructions stored thereon that, when executed by a processor of a mobile terminal, cause the mobile terminal performs steps of the small-screen window display method according to any one of claims 1 to 4.

## Patentansprüche

1. Verfahren zur Anzeige eines Kleinbildschirmfensters, das bei einem Endgerät angewandt wird und umfasst:
Erfassen (S101) eines Drag-Ereignisses als Reaktion auf das Ziehen eines bestimmten Bereichs eines Kleinbildschirmfensters, das eine Anwendungsschnittstelle auf dem Endgerät anzeigt;
Bestimmen (S102), basierend auf dem Drag-Ereignis, einer Drag-Position entsprechend einem Zeitpunkt, zu dem das Kleinbildschirmfenster zum Anhalten gezogen wird;
Starten eines Animators (S201, S301, S401, S501, S601), Steuern der Bewegung des Kleinbildschirmfensters in dem Animator basierend auf der Drag-Position, und Bestimmen einer Anzeigegröße des Kleinbildschirmfensters an der Drag-Position;
als Reaktion darauf, dass sich die Drag-Position in einer Hot Zone befindet, die dazu ausgebildet ist, das Kleinbildschirmfenster dazu zu bringen, eine erste Funktion (S502) auszuführen, Prompten, in der Hot Zone, einer Funktion, die ausgeführt werden soll, nachdem das Ziehen angehalten wird (S503);
als Reaktion auf das Prompten, Steuern des Kleinbildschirmfensters in dem Animator, so dass es gemäß der Anzeigegröße an der Drag-Position fest angezeigt wird;
Bestimmen einer Fenstergröße und einer Fensterposition entsprechend dem Kleinbildschirmfenster basierend auf der Drag-Position (S601); und
Steuern des Kleinbildschirmfensters in dem Animator, um mit der Fensterposition und der Fenstergröße zu beginnen und bis zum Verlassen zu einer Mitte des Kleinbildschirmfensters herauszuzoomen, wenn die Drag-Position eine zweite Bereichsposition ist, die dazu ausgebildet ist, das Kleinbildschirmfenster dazu zu bringen, die Animationsanzeige zu verlassen (S602).

2. Verfahren zur Anzeige eines Kleinbildschirmfensters nach Anspruch 1, das ferner umfasst:
Steuern des Kleinbildschirmfensters in dem Animator, um aus der Fensterposition und der Fenstergröße ist eine Position und eine Größe vor dem Ziehen zurückzukehren, wenn die Drag-Position eine erste Bereichsposition ist, die dazu ausgebildet ist, das Kleinbildschirmfenster dazu zu bringen, die Anzeige wiederherzustellen (S302).

3. Verfahren zur Anzeige eines Kleinbildschirmfensters nach Anspruch 1, das ferner umfasst:
Steuern des Kleinbildschirmfensters in dem Animator, um eine Funktion entsprechend der Drag-Position gemäß der Fenstergröße und der Fensterposition durchzuführen, wenn sich die Drag-Position in der Hot Zone befindet (S402).

4. Verfahren zur Anzeige eines Kleinbildschirmfensters nach Anspruch 1, das ferner umfasst:
Steuern (S704) des Kleinbildschirmfensters, um von der Drag-Position in die Fensterposition zu wechseln und eine Anzeige gemäß der Fenstergröße an der Fensterposition durchzuführen.

5. Vorrichtung zur Anzeige eines Kleinbildschirmfensters, die bei einem Endgerät angewandt wird und aufweist:
eine Erfassungsschaltung (101), die dazu ausgebildet ist, ein Drag-Ereignis als Reaktion auf das Ziehen eines bestimmten Bereichs eines Kleinbildschirmfensters zu erfassen, das eine Anwendungsschnittstelle auf dem Endgerät anzeigt (S101);
eine Bestimmungsschaltung (102), die dazu ausgebildet ist, basierend auf dem Drag-Ereignis eine Drag-Position entsprechend einem Zeitpunkt zu bestimmen, zu dem das Kleinbildschirmfenster zum Anhalten gezogen wird (S102); und
eine Steuerschaltung (103), die dazu ausgebildet ist, einen Animator (S201, S301, S401, S501, S601) zu starten, die Bewegung des Kleinbildschirmfensters in dem Animator basierend auf der Drag-Position zu steuern, und eine Anzeigegröße des Kleinbildschirmfensters an der Drag-Position zu bestimmen; und
eine Prompt-Schaltung (104), die für Folgende ausgebildet ist:
als Reaktion drauf, dass sich die Drag-Position in einer Hot Zone befindet, die dazu ausgebildet ist, das Kleinbildschirmfenster dazu zu bringen, eine erste Funktion (S502) auszuführen, Prompten, in der Hot Zone, einer Funktion, die durchgeführt werden soll, nachdem das Ziehen angehalten wird (S503), und als Reaktion auf das Prompten, Steuern des Kleinbildschirmfensters in dem Animator, so dass es gemäß der Anzeigegröße an der Drag-Position fest angezeigt wird;
wobei die Steuerschaltung (103) ferner für Folgendes ausgebildet ist:
Bestimmen einer Fenstergröße und einer Fensterposition entsprechend dem Kleinbildschirmfenster basierend auf der Drag-Position (S601); und
Steuern des Kleinbildschirmfensters in dem Animator, um mit der Fensterposition und der Fenstergröße zu beginnen und bis zum Verlassen zu einer Mitte des Kleinbildschirmfensters herauszuzoomen, wenn die Drag-Position eine zweite Bereichsposition ist, die dazu ausgebildet ist, das Kleinbildschirmfenster dazu zu bringen, die Animationsanzeige zu verlassen (S602).

6. Vorrichtung zur Anzeige eines Kleinbildschirmfensters nach Anspruch 5, wobei die Steuerschaltung (103) ferner für Folgendes ausgebildet ist:
Steuern des Kleinbildschirmfensters in dem Animator, um aus der Fensterposition und der Fenstergröße ist eine Position und Größe vor dem Ziehen zurückzukehren, wenn die Drag-Position eine erste Bereichsposition ist, die dazu ausgebildet ist, das Kleinbildschirmfenster dazu zu bringen, die Anzeige wiederherzustellen (S302).

7. Vorrichtung zur Anzeige eines Kleinbildschirmfensters nach Anspruch 5, wobei die Steuerschaltung (103) ferner für Folgendes ausgebildet ist:
Steuern des Kleinbildschirmfensters in dem Animator, um eine Funktion, die der Drag-Position entspricht, gemäß der Fenstergröße und der Fensterposition durchzuführen, wenn sich die Drag-Position in der Hot Zone befindet (S402).

8. Vorrichtung zur Anzeige eines Kleinbildschirmfensters nach einem der Ansprüche 5 bis 7, wobei die Vorrichtung zur Anzeige eines Kleinbildschirmfensters ferner aufweist:
eine Anzeigeschaltung (105), die dazu ausgebildet ist, das Kleinbildschirmfenster so zu steuern, dass es von der Drag-Position in die Fensterposition wechselt und eine Anzeige gemäß der Fenstergröße an der Fensterposition durchführt (S704).

9. Vorrichtung zur Anzeige eines Kleinbildschirmfensters (800), die aufweist:
einen Prozessor (820); und
einen Speicher (804), der dazu ausgebildet ist, von dem Prozessor ausführbare Anweisungen zu speichern, wobei der Prozessor dazu ausgebildet ist, das Verfahren zur Anzeige eines Kleinbildschirmfensters nach einem der Ansprüche 1 bis 4 durchzuführen.

10. Nichtflüchtiges computerlesbares Speichermedium, auf dem Anweisungen gespeichert sind, die bei Ausführung durch einen Prozessor eines mobilen Endgeräts bewirken, dass das mobile Endgerät die Schritte des Verfahrens zur Anzeige eines Kleinbildschirmfensters nach einem der Ansprüche 1 bis 4 durchführt.

## Revendications

1. Procédé d'affichage de petite fenêtre sur écran, appliqué à un terminal et comprenant :
l'acquisition (S101) d'un événement de glissement en réponse au glissement d'une zone désignée d'une petite fenêtre sur écran affichant une interface d'application sur le terminal ;
la détermination (S102), en fonction de l'événement de glissement, d'une position de glissement correspondant à un moment où l'on fait glisser la petite fenêtre sur écran jusqu'à l'arrêt ;
le démarrage d'une séquence d'animation (S201, S301, S401, S501, S601), la commande de déplacement de la petite fenêtre sur écran dans la séquence d'animation en fonction de la position de glissement, et la détermination d'une taille d'affichage de la petite fenêtre sur écran au niveau de la position de glissement ;
en réponse au fait que la position de glissement est dans une zone sensible configurée pour amener la petite fenêtre sur écran à mettre en oeuvre une première fonction (S502), la mise en avant, dans la zone sensible, d'une fonction à mettre en oeuvre après que le glissement est arrêté (S503) ;
en réponse à la mise en avant, la commande de la petite fenêtre sur écran dans la séquence d'animation pour qu'elle soit affichée fixement selon la taille d'affichage au niveau de la position de glissement ;
la détermination d'une taille de fenêtre et d'une position de fenêtre correspondant à la petite fenêtre sur écran en fonction de la position de glissement (S601) ; et
la commande de la petite fenêtre sur écran dans la séquence d'animation pour démarrer avec la position de fenêtre et la taille de fenêtre et pour effectuer un zoom arrière en direction d'un centre de la petite fenêtre sur écran jusqu'à sortie, si la position de glissement est une position de seconde zone configurée pour amener la petite fenêtre sur écran à sortir de l'affichage d'animation (S602).

2. Procédé d'affichage de petite fenêtre sur écran selon la revendication 1, comprenant en outre :
la commande de la petite fenêtre sur écran dans la séquence d'animation pour revenir de la position de fenêtre et de la taille de fenêtre à une position et à une taille avant glissement, si la position de glissement est une position de première zone configurée pour amener la petite fenêtre sur écran à restaurer l'affichage (S302).

3. Procédé d'affichage de petite fenêtre sur écran selon la revendication 1, comprenant en outre :
la commande de la petite fenêtre sur écran dans la séquence d'animation pour mettre en oeuvre une fonction correspondant à la position de glissement selon la taille de fenêtre et la position de fenêtre, si la position de glissement est dans la zone sensible (S402).

4. Procédé d'affichage de petite fenêtre sur écran selon la revendication 1, comprenant en outre :
la commande (S704) de la petite fenêtre sur écran pour commuter de la position de glissement à la position de fenêtre, et pour mettre en oeuvre un affichage selon la taille de fenêtre au niveau de la position de fenêtre.

5. Dispositif d'affichage de petite fenêtre sur écran, appliqué à un terminal et comprenant :
un circuit d'acquisition (101), configuré pour acquérir un événement de glissement en réponse à un glissement d'une zone désignée d'une petite fenêtre sur écran affichant une interface d'application sur le terminal (S101) ;
un circuit de détermination (102), configuré pour déterminer, en fonction de l'événement de glissement, une position de glissement correspondant à un moment où l'on fait glisser la petite fenêtre sur écran jusqu'à l'arrêt (S102) ; et
un circuit de commande (103), configuré pour démarrer une séquence d'animation (S201, S301, S401, S501, S601), commander un déplacement de la petite fenêtre sur écran dans la séquence d'animation en fonction de la position de glissement, et déterminer une taille d'affichage de la petite fenêtre sur écran au niveau de la position de glissement ; et
un circuit de mise en avant (104), configuré pour :
en réponse au fait que la position de glissement est dans une zone sensible configurée pour amener la petite fenêtre sur écran à mettre en oeuvre une première fonction (S502), mettre en avant, dans la zone sensible, une fonction à mettre en oeuvre après que le glissement est arrêté (S503), et
en réponse à la mise en avant, commander la petite fenêtre sur écran dans la séquence d'animation pour qu'elle soit affichée fixement selon la taille d'affichage au niveau de la position de glissement ;
dans lequel le circuit de commande (103) est configuré en outre pour :
déterminer une taille de fenêtre et une position de fenêtre correspondant à la petite fenêtre sur écran en fonction de la position de glissement (S601) ; et
commander la petite fenêtre sur écran dans la séquence d'animation pour démarrer avec la position de fenêtre et la taille de fenêtre et pour effectuer un zoom arrière en direction d'un centre de la petite fenêtre sur écran jusqu'à sortie, si la position de glissement est une position de seconde zone configurée pour amener la petite fenêtre sur écran à sortir de l'affichage d'animation (S602).

6. Dispositif d'affichage de petite fenêtre sur écran selon la revendication 5, dans lequel le circuit de commande (103) est configuré en outre pour :
commander la petite fenêtre sur écran dans la séquence d'animation pour revenir de la position de fenêtre et de la taille de fenêtre à une position et à une taille avant glissement, si la position de glissement est une position de première zone configurée pour amener la petite fenêtre sur écran à restaurer l'affichage (S302).

7. Dispositif d'affichage de petite fenêtre sur écran selon la revendication 5, dans lequel le circuit de commande (103) est configuré en outre pour :
commander la petite fenêtre sur écran dans la séquence d'animation pour mettre en oeuvre une fonction correspondant à la position de glissement selon la taille de fenêtre à la position de fenêtre, si la position de glissement est dans la zone sensible (S402).

8. Dispositif d'affichage de petite fenêtre sur écran selon l'une quelconque des revendications 5 à 7, dans lequel le dispositif d'affichage de petite fenêtre sur écran comprend en outre :
un circuit d'affichage (105), configuré pour commander la petite fenêtre sur écran pour commuter de la position de glissement à la position de fenêtre, et pour mettre en oeuvre un affichage selon la taille de fenêtre à la position de fenêtre (S704).

9. Dispositif d'affichage de petite fenêtre sur écran (800), comprenant :
un processeur (820) ; et
de la mémoire (804), configurée pour stocker des instructions exécutables par le processeur,
dans lequel le processeur est configuré pour mettre en oeuvre le procédé d'affichage de petite fenêtre sur écran selon l'une quelconque des revendications 1 à 4.

10. Support de stockage non transitoire lisible par ordinateur sur lequel sont stockées des instructions qui, lorsqu'elles sont exécutées par un processeur d'un terminal mobile, amènent le terminal mobile à mettre en oeuvre des étapes du procédé d'affichage de petite fenêtre sur écran selon l'une quelconque des revendications 1 à 4.
